# EUROPEAN PATENT APPLICATION

(11) **EP 4 711 326 A1**
(43) Date of publication of application: **18.03.2026**
(21) Application number: 25196041.5
(22) Date of filing: 14.08.2025
(51) Int. Cl.: C01B 3/0089, F17C 7/04, H01M 8/04007

(54) **HYDROGEN CATALYST FOR VEHICLE COOLING**

(30) Priority: 15.08.2024 US 202463683580 P
(71) Applicant: Daimler Truck North America LLC, Portland, OR 97217-7613 (US)
(72) Inventor: Slusser, Kevin, Portland, OR 97217-7613 (US); Barra, Zachary Joseph, Portland, OR 97217-7613 (US)
(74) Representative: impuls legal PartG mbB

(57) **Abstract**

A hydrogen catalyst for vehicle cooling is described. A system may include a catalyst positioned in a flow path coupling a hydrogen storage tank to a hydrogen consumer, the catalyst configured to convert hydrogen fuel from a para state to an ortho state via an endothermic reaction. The system may further include a coolant circuit configured to circulate coolant through the hydrogen consumer and a coolant-fed heat exchanger configured to thermally couple the coolant in the coolant circuit to the hydrogen fuel, the coolant-fed heat exchanger arranged upstream of the hydrogen consumer in the flow path.

## Description

### FIELD

The present description relates generally to a hydrogen fuel storage system for a vehicle.

### BACKGROUND

Alternative fuels, such as hydrogen, have gained popularity as sustainable and environmentally friendly alternatives to traditional hydrocarbon fuels for vehicle propulsion. Hydrogen fuel, for instance, can be utilized through fuel cells or through combustion engines to generate energy for vehicle propulsion. For example, hydrogen fuel cells generate electricity through an electrochemical reaction between hydrogen and oxygen, while hydrogen combustion engines burn hydrogen in a manner similar to conventional internal combustion engines but with a significant reduction in emissions.

Fuel cells and combustion engines both produce heat as a byproduct. Heat is typically rejected through a combination of exhaust heat and thermal heat. For example, exhaust heat is rejected as exhaust gas, while thermal heat is typically rejected by a cooling system with a liquid to air heat exchanger, such as a radiator. In both fuel cells and combustion engines, excessive heat accumulation can lead to reduced efficiency, accelerated degradation, and diminished overall performance.

Accordingly, vehicles include cooling systems to reject thermal heat. The size of the cooling system is dependent on the amount of thermal heat output by the fuel cell or engine. Fuel cells generally output a significantly higher percentage of their heat rejection as thermal heat and therefore may use a larger, more substantial cooling system to reject this heat.

### SUMMARY

A hydrogen catalyst for vehicle cooling is described. A system may include a catalyst positioned in a flow path coupling a hydrogen storage tank to a hydrogen consumer, the catalyst configured to convert hydrogen fuel from a para state to an ortho state via an endothermic reaction. The system may further include a coolant circuit configured to circulate coolant through the hydrogen consumer, and a coolant-fed heat exchanger configured to thermally couple the coolant in the coolant circuit to the hydrogen fuel, the coolant-fed heat exchanger arranged upstream of the hydrogen consumer in the flow path.

It should be understood that the summary above is provided to introduce, in simplified form, a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The detailed description is described with reference to the accompanying figures. Entities represented in the figures are indicative of one or more entities and thus, reference is made interchangeably to single or plural forms of the entities in the discussion.
FIG. 1 is a schematic diagram of an implementation of an example hydrogen fuel system of a vehicle.
FIG. 2 is a schematic diagram of an implementation of an example hydrogen fuel system of a vehicle.
FIG. 3 is a flow diagram depicting an algorithm as a step-by-step procedure in an example of implementing a hydrogen catalyst for vehicle cooling.
FIG. 4 is a schematic top view of an example configuration of a vehicle in which the techniques described herein may be implemented.

### DETAILED DESCRIPTION

### Overview

The following description relates to systems and methods for a hydrogen catalyst for vehicle cooling. As mentioned above, both fuel cells and combustion engines produce heat during hydrogen fuel consumption. Effective thermal management of waste heat is not only desired for efficient power output, but for decreasing cooling system size. For example, packaging for large cooling systems on a vehicle is a significant challenge and drives up costs associated with vehicle manufacture. Moreover, larger cooling systems add more vehicle weight, which decreases fuel efficiency and also reduces an amount of cargo that can be held by the vehicle due to gross vehicle weight maximums, particularly in the case of commercial vehicles.

The inventors herein have recognized the above issues and have engineered a solution to at least partially address one or more of such issues by providing a system configured to absorb a portion of the thermal load directly into the hydrogen fuel itself. As such, the architectures described herein can decrease required radiator frontal area, thereby reducing aerodynamic drag, system mass, and/or overall system cost. In one example, a system is provided, comprising a catalyst positioned in a flow path coupling a hydrogen storage tank to a hydrogen consumer, the catalyst configured to convert hydrogen fuel from a para state to an ortho state via an endothermic reaction, a coolant circuit configured to circulate coolant through the hydrogen consumer, and a coolant-fed heat exchanger configured to thermally couple the coolant in the coolant circuit to the hydrogen fuel, the coolant-fed heat exchanger arranged upstream of the hydrogen consumer in the flow path. By using the catalyst to cool the hydrogen fuel through its endothermic para/ortho conversion, a larger amount of heat can be rejected from the coolant to the hydrogen fuel, thus increasing a cooling capacity of the cooling system. In other words, locating the para/ortho conversion catalyst in the hydrogen flow path yields a dual benefit: (i) the conversion absorbs latent heat, dropping the temperature of the hydrogen and thus increasing the temperature gradient available for subsequent coolant-to-hydrogen heat exchange; and (ii) the warmed hydrogen leaving the heat exchanger arrives at the fuel cell or engine near an optimal operating temperature, avoiding separate fuel-conditioning hardware. As a result, increased fuel cell or combustion engine power output, fuel cell efficiency, and/or reduced cooling system size and cost may be achieved.

For example, the catalyst may be positioned within the hydrogen storage tank, such as in a catalyst heat exchanger coupled upstream of an outlet conduit that flows the hydrogen fuel from the hydrogen storage tank to the coolant-fed heat exchanger. Placing the catalyst in-tank enables parasitic boil-off heat to be recovered for useful cooling, extending dormant-park hold time and reducing vent losses. As the hydrogen fuel flows through the catalyst heat exchanger, it undergoes the endothermic para/ortho conversion, imparting an overall cooling effect to hydrogen fuel. Alternatively, the catalyst may be integrated into the coolant-fed heat exchanger, in a separate flow path from the coolant. Embedding the catalyst directly within the heat exchanger simplifies routing, eliminates an extra component, and provides service-state access to the catalyst without breaching the cryogenic tank. In this configuration, the para/ortho conversion occurs as the hydrogen fuel flows through the coolant-fed heat exchanger, providing a direct cooling effect to the coolant circuit.

The system may also include an in-tank heat exchanger positioned within the hydrogen storage tank and a valve arranged at a hydrogen outlet of the coolant-fed heat exchanger. The valve may be adjusted to block or enable flow from the coolant-fed heat exchanger to the in-tank heat exchanger based on pressure conditions within the hydrogen storage tank. This closed-loop, pressure-adaptive routing advantageously stabilizes tank pressure without active heaters, thereby preserving stored hydrogen mass and minimizing electrical load. When a pressure of the hydrogen storage tank falls below a desired range, for instance, the valve may be positioned to allow a portion of the heated hydrogen fuel to flow through the in-tank heat exchanger in order to promote vaporization of the liquid hydrogen and increase the pressure. A return conduit couples the in-tank heat exchanger to the flow path, upstream of the coolant-fed heat exchanger, allowing the portion of the hydrogen fuel, which may be at a lower temperature due to transferring heat at the in-tank heat exchanger, to return to the coolant-fed heat exchanger. As such, the system may efficiently manage hydrogen fuel temperature and hydrogen storage tank pressure.

By further cooling the hydrogen fuel via the endothermic para/ortho conversion, the cooling system has an increased overall cooling capacity and efficiency. In some implementations, for example, test data indicate that each kilogram (kg) of hydrogen processed through the catalyst can absorb roughly 1 kilowatt (kW) of heat, translating to an approximate 10% reduction in conventional radiator load for a typical fuel-cell truck duty cycle. By diverting a portion of the heat load from the coolant to the hydrogen fuel, the hydrogen fuel is warmed for consumption by the fuel cell or combustion engine while the coolant is cooled. Moreover, the space constraint and heat transfer efficiency issues associated with increasing the cooling system size are avoided while the cooling capacity of the coolant system is increased.

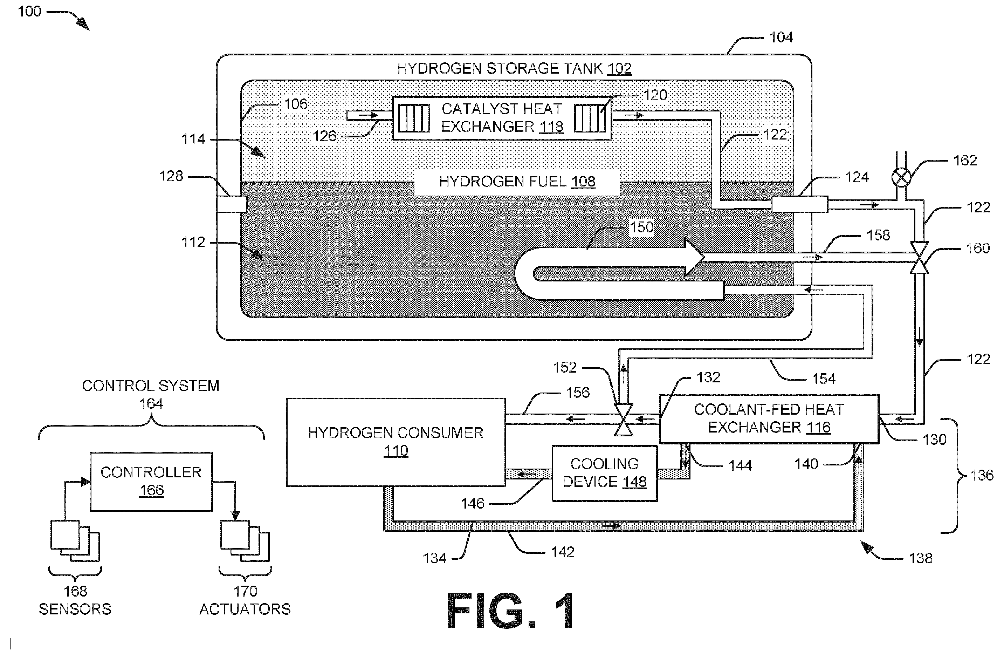

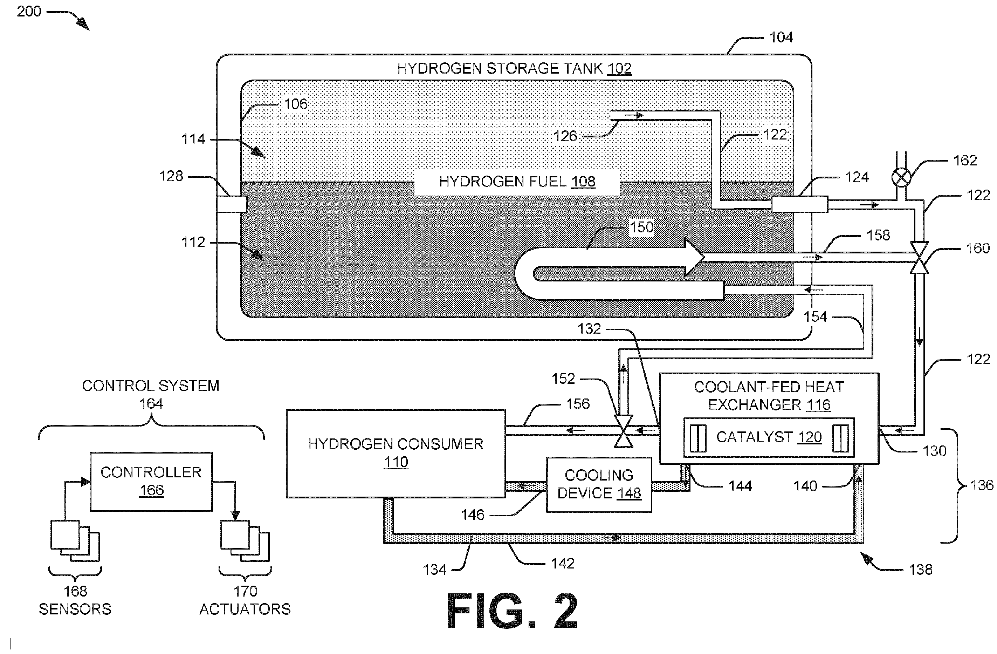

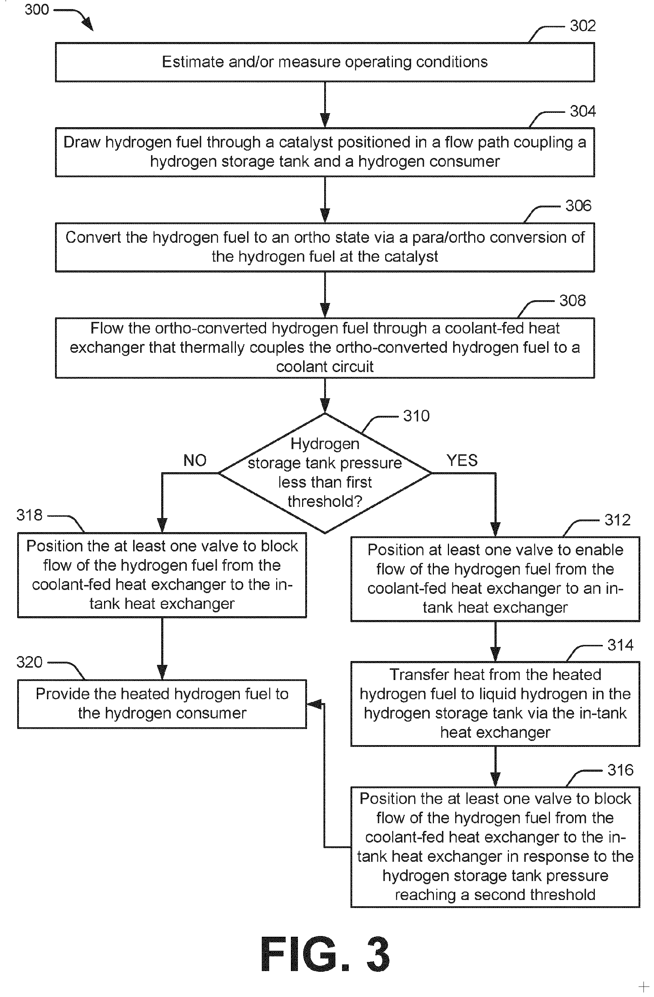

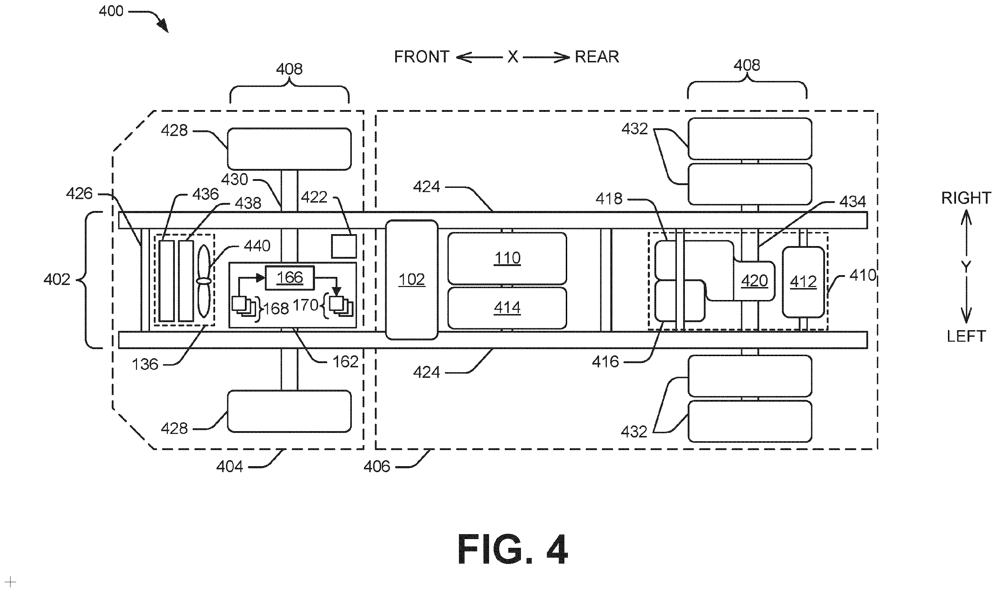

Further discussion of these and other examples is included in the following description and shown in corresponding figures. A first example implementation of a hydrogen fuel system for a vehicle is shown in FIG. 1, which includes a para to ortho conversion catalyst positioned within a hydrogen storage tank. This implementation may be particularly advantageous for long-haul vehicles that remain parked for extended periods because tank boil-off is suppressed, extending dormant storage time without venting. A second example implementation of the hydrogen fuel system is shown in FIG. 2, which includes the para to ortho conversion catalyst integrated into the coolant-fed heat exchanger. In some case, locating the catalyst outside the hydrogen storage tank simplifies regulatory certification and catalyst replacement, facilitating lower service costs over the vehicle lifetime. Regardless of the position of the para to ortho conversion catalyst, the coolant-fed heat exchanger thermally couples the hydrogen fuel to heated coolant, thus facilitating heat transfer from the heated coolant to the cooler hydrogen fuel. Moreover, at least a portion of the heated hydrogen fuel (e.g., as heated by the coolant at the coolant-fed heat exchanger) may be routed to an in-tank heat exchanger to facilitate additional vaporization of liquid hydrogen stored in the hydrogen storage tank, such as according to the procedure of FIG. 3. FIG. 4 depicts an example vehicle system that may include the hydrogen fuel system of FIG. 1 or FIG. 2.

In the following discussion, an example system is first described that may employ the techniques described herein. Examples of implementation details and procedures are then described which may be performed in the example system as well as other systems. Performance of the example procedures is not limited to the example system, and the example system is not limited to performance of the example procedures.

### Hydrogen Catalyst for Vehicle Cooling

FIG. 1 schematically shows an implementation of a first example hydrogen fuel system 100 of a vehicle. By way of example, the first example hydrogen fuel system 100 may be a cryogenic liquid hydrogen fuel system. The first example hydrogen fuel system 100 includes a hydrogen storage tank 102 having an outer tank surface 104 and an inner tank surface 106. The hydrogen storage tank 102 is configured to store hydrogen fuel 108 (also referred to as "hydrogen" herein) before it is provided to a hydrogen consumer 110. In at least one implementation, the hydrogen fuel 108 exists within the hydrogen storage tank 102 (e.g., within the inner tank surface 106) as liquid hydrogen 112, indicated as a darker shaded portion in FIG. 1, and gaseous hydrogen 114, indicated as a lighter shaded portion in FIG. 1. Thus, reference to "hydrogen fuel 108" herein refers to the liquid hydrogen 112, the gaseous hydrogen 114, and/or mixtures thereof.

In at least one implementation, the liquid hydrogen 112 is cryogenically stored and maintained at a temperature less than its boiling point. By way of example, the liquid hydrogen 112 may be stored at approximately -253 °C. In contrast, the gaseous hydrogen 114 is above the boiling point of the liquid hydrogen 112. For example, the gaseous hydrogen 114 may be warmer than -253 °C, but still within the cryogenic temperature range. The gaseous hydrogen 114, for instance, is boil-off from the liquid hydrogen 112. The hydrogen storage tank 102 may be insulated in order to reduce heat transfer between the hydrogen fuel 108 in the hydrogen storage tank 102 and the surrounding environment. By way of example, the area between the outer tank surface 104 and the inner tank surface 106 may be evacuated to provide vacuum insulation, although other types of insulation may also be used in addition to or as an alternative to vacuum insulation. In at least on implementation, the area between the outer tank surface 104 and the inner tank surface 106 includes at least one pair of magnets configured to provide a suspension system via a magnetic repulsive force that provides a continuous non-contact region between the outer tank surface 104 and the inner tank surface 106. Additional details regarding the magnet-based suspension system that may be included in the hydrogen storage tank 102 can be found in U.S. Provisional Application No. 63/653,406, the entire contents of which is incorporated by reference in its entirety.

Broadly, the hydrogen consumer 110 is a system or component of the vehicle that uses the hydrogen fuel 108 to generate power for vehicle propulsion and/or other vehicle functions. By way of example, the hydrogen consumer 110 may convert the hydrogen fuel 108 into energy through one or more chemical, electrochemical, and/or thermal processes, and this energy may be used to drive the vehicle and/or power vehicle systems. In at least one implementation, the hydrogen consumer 110 is a fuel cell that uses the hydrogen fuel 108 in an electrochemical reaction that produces electrical energy. The electrical energy may be converted into mechanical energy by an electric motor to propel the vehicle, for instance. In at least one variation, the hydrogen consumer 110 is a combustion engine that uses the hydrogen fuel 108 in a combustion reaction, where force from expanding gases in the combustion reaction generates mechanical power to propel the vehicle.

In at least one implementation, the hydrogen fuel 108 is utilized by the hydrogen consumer 110 at a warmer temperature than the temperature at which it is stored. By way of example, the hydrogen fuel 108 may be utilized at a temperature that is greater than 0 °C. Accordingly, the hydrogen fuel 108 may flow to a coolant-fed heat exchanger 116, where it is warmed before flowing to the hydrogen consumer 110, as will be further explained below.

Moreover, the hydrogen fuel 108, having the chemical formula H₂, can exist in two different spin isomers, also referred to herein as "states": ortho-hydrogen (also termed "ortho" herein) and para-hydrogen (also termed "para" herein). These isomers differ in the spin states of their two hydrogen nuclei. In the ortho state, the spins of the two protons are parallel, meaning the spins are aligned in the same direction. In the para state, the spins of the two protons are antiparallel, meaning the spins are in opposite directions. Because of the opposed spins, para-hydrogen has a lower energy level than ortho-hydrogen and is therefore more thermodynamically favorable at lower (e.g., cryogenic) temperatures. As such, most (e.g., approximately 99.8%) of the hydrogen fuel 108 in the hydrogen storage tank 102 exists in the para state.

In accordance with the techniques described herein, the first example hydrogen fuel system 100 shown in FIG. 1 includes a catalyst heat exchanger 118 inside of the hydrogen storage tank 102 (e.g., enclosed by the inner tank surface 106). The catalyst heat exchanger 118 comprises a catalyst 120 that catalyzes a para to ortho conversion of the hydrogen fuel 108. The catalyst 120, for instance, is a catalytic material such as an iron oxide (e.g., ferric oxide), platinum, and/or another material that facilitates the spin-flip process of the para to ortho conversion of the hydrogen fuel 108. The catalyst 120 may be arranged in the catalyst heat exchanger 118 on or within a support material in one or more layers, which may form a catalyst bed. The para to ortho (also abbreviated as "para/ortho" herein) conversion is an endothermic reaction that absorbs heat. As such, the para/ortho conversion provides a cooling effect to the hydrogen fuel 108 in the hydrogen storage tank 102 as well as to the hydrogen fuel 108 flowing through the catalyst 120.

In one or more implementations, the catalyst heat exchanger 118 is positioned in and/or coupled upstream of a tank outlet conduit 122 of the hydrogen storage tank 102. The tank outlet conduit 122 comprises one or more conduits configured to carry the hydrogen fuel 108 to vehicle components outside of the hydrogen storage tank 102 (e.g., external to the outer tank surface 104), such as the coolant-fed heat exchanger 116. The tank outlet conduit 122, for instance, traverses a pass-through component 124 of the hydrogen storage tank 102 in order to deliver the hydrogen fuel 108 from inside of the hydrogen storage tank 102 (e.g., from inside of the inner tank surface 106) to outside of the hydrogen storage tank 102 (e.g., to outside of the outer tank surface 104).

The catalyst heat exchanger 118 may receive the hydrogen fuel 108 via a hydrogen inlet 126. In at least one implementation, the hydrogen inlet 126 is positioned near a top of the hydrogen storage tank 102. Such a position may facilitate routing of the gaseous hydrogen 114 though the catalyst heat exchanger 118 and through the tank outlet conduit 122. In at least one variation, however, the hydrogen inlet 126 draws in the liquid hydrogen 112 in addition to or as an alternative to the gaseous hydrogen 114. Regardless of the state of matter of the hydrogen fuel 108, as the hydrogen fuel 108 flows through the catalyst heat exchanger 118, molecules of the hydrogen fuel 108 interact with the catalyst 120, which facilitates a spin-flip of one of the hydrogen nuclei to convert the molecules to the ortho, higher energy level state by absorbing heat energy from the surrounding interior of the hydrogen storage tank 102 as well as the molecules of hydrogen flowing through the catalyst 120.

The ortho-converted, cooled hydrogen fuel 108 flows from the catalyst heat exchanger 118 and is routed out of the hydrogen storage tank 102 via the tank outlet conduit 122 and the pass-through component 124. The pass-through component 124 may also be part of a tank suspension component that mounts or secures the hydrogen storage tank 102 to the vehicle. One or more additional tank suspension components 128 may be positioned at other locations of the hydrogen storage tank 102. Whereas the pass-through component 124 may include a channel or another type of opening for routing the tank outlet conduit 122 out of the interior of the hydrogen storage tank 102, in at least one implementation, the one or more additional tank suspension components 128 do not include a channel. It is to be appreciated that the pass-through component 124 may form a seal with the tank outlet conduit 122 and the hydrogen storage tank 102 in order to prevent the hydrogen fuel 108 from inadvertently flowing out of the hydrogen storage tank 102 via other paths (e.g., paths other than the tank outlet conduit 122).

In at least one implementation, the tank outlet conduit 122 is coupled to a hydrogen inlet 130 of the coolant-fed heat exchanger 116. The ortho-converted, cooled hydrogen fuel 108 flows through the coolant-fed heat exchanger 116 from the hydrogen inlet 130 to a hydrogen outlet 132 of the coolant-fed heat exchanger 116. It is to be understood that the term "ortho-converted" as herein used refers to hydrogen that has been exposed to the catalyst and does not necessarily imply that every single molecule has been converted to ortho hydrogen. Some amount of para hydrogen may remain. The coolant-fed heat exchanger 116 further receives liquid coolant 134 from a cooling system 136. The liquid coolant 134, also referred to herein simply as "coolant 134," may be, for example, water, a glycol-based antifreeze (e.g., ethylene glycol, propylene glycol, propylene glycol methyl ether), or a mixture thereof that provides a working fluid for heat transfer in the cooling system 136.

The cooling system 136 includes a coolant circuit 138 (e.g., a coolant loop) configured to circulate the coolant 134 through the hydrogen consumer 110 and the coolant-fed heat exchanger 116 via a plurality of coolant lines that form a sealed loop. By way of example, as the coolant 134 flows through the hydrogen consumer 110, heat is transferred from the hotter hydrogen consumer 110 components to the cooler coolant 134, thus increasing the temperature of the coolant 134. An amount of heat transfer may be proportional to a temperature difference between the hydrogen consumer 110 and the coolant 134. The heated coolant 134 may flow to a coolant inlet 140 of the coolant-fed heat exchanger 116 via a first coolant line 142. As used herein, a "coolant line" refers to one or more conduits (e.g., flow passages) that fluidically couple components one to another.

The coolant 134 flows through the coolant-fed heat exchanger 116 from the coolant inlet 140 to a coolant outlet 144. That is, the hydrogen fuel 108 flows through the coolant-fed heat exchanger 116 via a first flow path between the hydrogen inlet 130 and the hydrogen outlet 132, while the coolant 134 flows through the coolant-fed heat exchanger 116 via a second flow path between the coolant inlet 140 and the coolant outlet 144. While flowing through the coolant-fed heat exchanger 116, the coolant 134 transfers heat to the ortho-converted, cooled hydrogen fuel 108. For example, the coolant-fed heat exchanger 116 thermally couples the coolant 134 and the hydrogen fuel 108, thus facilitating heat transfer from the hot coolant 134 to the ortho-converted, cooled hydrogen fuel 108. As a result, the temperature of the coolant 134 decreases, and the temperature of the hydrogen fuel 108 increases. For example, the temperature of the hydrogen fuel 108 may increase to an acceptable temperature for use at the hydrogen consumer 110 (e.g., a temperature above 0 °C). The cooled coolant 134 exits the coolant-fed heat exchanger 116 via the coolant outlet 144 and into a second coolant line 146 for return to the hydrogen consumer 110, thus completing the coolant circuit 138 (represented by shading in FIG. 1).

Because the hydrogen fuel 108 is further cooled by the endothermic para/ortho conversion by the catalyst 120, there is a larger temperature difference between the hydrogen fuel 108 and the coolant 134 compared to when the hydrogen fuel 108 is not further cooled. In turn, the larger temperature difference enables a greater cooling effect on the coolant 134.

In at least one implementation, the cooling system 136 further includes a cooling device 148. The cooling device 148 may be, for example, a radiator configured to transfer additional heat from the coolant 134 to ambient air. The cooling device 148 may include one or more fans to increase airflow across heat transfer surfaces. The cooling device 148 may be coupled within the second coolant line 146, such as depicted in FIG. 1. By way of example, a first portion of the heat of the coolant 134 may be transferred to the hydrogen fuel 108 at the coolant-fed heat exchanger 116, and a second portion of the heat of the coolant 134 may be transferred to ambient air at the cooling device 148. Cooling the coolant 134 at the coolant-fed heat exchanger 116 before flowing the coolant 134 to the cooling device 148 may reduce loading on the cooling device 148, for instance. In at least one variation, however, the cooling device 148 is coupled within the first coolant line 142. In such an implementation, a first portion of the heat of the coolant 134 may be transferred to the ambient air at the cooling device 148, and a second portion of the heat of the coolant 134 may be transferred to the hydrogen fuel 108 at the coolant-fed heat exchanger 116.

In at least one implementation, one or more valves control a flow of the hydrogen fuel 108 from the coolant-fed heat exchanger 116. For example, the one or more valves may be positioned to selectively enable or block flow of a portion of the warmed hydrogen fuel 108 from the coolant-fed heat exchanger 116 to an in-tank heat exchanger 150 positioned inside the hydrogen storage tank 102. The in-tank heat exchanger 150 may be configured to transfer heat from the heated hydrogen fuel 108 to the liquid hydrogen 112. By transferring heat from the portion of the warmed hydrogen fuel 108 to the liquid hydrogen 112, vaporization may occur to generate more of the gaseous hydrogen 114 and increase a pressure of the hydrogen storage tank 102.

By way of example, the pressure of the hydrogen storage tank 102 may be maintained within a desired pressure range to facilitate uptake of the hydrogen fuel 108 (e.g., the gaseous hydrogen 114) by the hydrogen inlet 126. As a non-limiting example, the desired pressure range is between 5 bar and 10 bar. In alternative examples, the desired pressure range includes values less than 5 bar (e.g., values between and including 1 bar and 4 bar) or greater than 10 bar (e.g., 18 bar). When the pressure falls below the desired pressure range, such as below a lower threshold of the desired pressure range, a first valve 152 may be adjusted to allow a first portion of the warmed hydrogen fuel 108 to flow to the in-tank heat exchanger 150 via a conduit 154 (e.g., indicated by dashed arrows in FIG. 1), while a second, remaining portion of the warmed hydrogen fuel 108 flows to the hydrogen consumer 110 via a fuel delivery conduit 156 (e.g., indicated by solid arrows in FIG. 1). The first valve 152, for instance, may be disposed in the fuel delivery conduit 156 between the hydrogen outlet 132 and the hydrogen consumer 110. When the first valve 152 is in a first position, the first valve 152 blocks flow to the conduit 154 while enabling flow through the fuel delivery conduit 156. The first position of the first valve 152 may be referred to as a closed position (e.g., closed with respect to the conduit 154). When the first valve 152 is in a second position, the first valve 152 enables flow to the conduit 154 while maintaining flow through the fuel delivery conduit 156. The second position of the first valve 152 may be referred to as an open position (e.g., open with respect to the conduit 154).

In at least one implementation, the first valve 152 is an on/off valve (e.g., a binary state valve) that is adjustable between a fully open position and a fully closed position. In one or more variations, however, the first valve 152 is a proportionate valve having a variable orifice that is adjustable (e.g., continuously adjustable) between the fully open position and the fully closed position. By way of example, the first valve 152 may be adjusted based on a fueling demand of the hydrogen consumer 110, with the first valve 152 adjusted to a position that is further closed to the conduit 154 (and thus further open to the fuel delivery conduit 156) as the fueling demand increases.

After flowing through the in-tank heat exchanger 150, the cooler hydrogen fuel 108 may be routed back to the tank outlet conduit 122 via a return conduit 158 and a second valve 160. The return conduit 158 fluidically couples the in-tank heat exchanger 150 to the tank outlet conduit 122 at a position upstream of the coolant-fed heat exchanger 116 and downstream of the pass-through component 124. By way of example, the return conduit 158 may be selectively fluidically coupled to the tank outlet conduit 122 via the second valve 160. When the second valve 160 is in a first position, the second valve 160 blocks flow between the return conduit 158 and the tank outlet conduit 122 while enabling flow through the tank outlet conduit 122 (e.g., to the hydrogen inlet 130). The first position of the second valve 160 may be referred to as a closed position (e.g., closed with respect to the return conduit 158). When the second valve 160 is in a second position, the second valve 160 enables flow from the return conduit 158 to the tank outlet conduit 122 while maintaining flow through the tank outlet conduit 122 to the hydrogen inlet 130 of the coolant-fed heat exchanger 116. The second position of the second valve 160 may be referred to as an open position (e.g., open with respect to the return conduit 158).

The first valve 152 and the second valve 160 may be electrically actuated and/or mechanically actuated valves. By way of example, one or both of the first valve 152 and the second valve 160 may be an electromechanical valve. Additionally or alternatively, one or both of the first valve 152 and the second valve 160 may be a pneumatic valve.

In at least one implementation, in order to maintain the hydrogen storage tank 102 within the desired pressure range, the first example hydrogen fuel system 100 further includes a pressure relief valve 162 coupled to the tank outlet conduit 122, upstream of the second valve 160. The pressure relief valve 162 may open to vent the hydrogen fuel 108 due to over-pressure (boil-off), e.g., when the pressure of the hydrogen storage tank 102 and/or the tank outlet conduit 122 exceeds the desired pressure range. The pressure relief valve 162 may be set to a defined pressure at which the over-pressure condition occurs, and venting is desired. Moreover, the catalyst heat exchanger 118 may be used to cool the hydrogen fuel 108 and thus slow the boil-off, which may reduce the pressure in the hydrogen storage tank 102 and/or the tank outlet conduit 122. This may advantageously result in reduced or altogether avoided release of the hydrogen fuel 108 to the environment over time.

A control system 164 may be communicatively coupled to various components of the first example hydrogen fuel system 100 as well as other vehicle components to carry out control routines and actions described herein. The control system 164 is shown including a controller 166. The controller 166 may be a microcomputer, including a microprocessor unit, input/output ports, an electronic storage medium for executable programs and calibration values, random access memory, keep alive memory, and a data bus. In some examples, the storage medium may be programmed with computer-readable data representing instructions executable by the processor for performing the methods (e.g., procedures) described below as well as other variants that are anticipated but not specifically listed.

As depicted, the controller 166 may receive input from at least one of a plurality of sensors 168 and adjust at least one of a plurality of actuators 170 based on the received input and instructions stored in non-transitory memory. The plurality of sensors 168 may include temperature sensors, pressure sensors, flow sensors, and other sensors for monitoring conditions within the first example hydrogen fuel system 100 and other vehicle systems. The plurality of actuators 170 may include the first valve 152, the second valve 160, pumps, and other devices for controlling the flow and conditions of the hydrogen fuel 108 and the coolant 134.

In operation, the controller 166 may adjust the first valve 152 and the second valve 160 based on operating conditions, such as the pressure within the hydrogen storage tank 102. For example, when the pressure in the hydrogen storage tank 102 is below the lower threshold of the desired pressure range, the controller 166 may position (e.g., open) the first valve 152 and the second valve 160 to enable flow of the first portion of the heated hydrogen fuel 108 to the in-tank heat exchanger 150, such as mentioned above. This allows heat transfer from the heated hydrogen fuel 108 to the liquid hydrogen 112, promoting vaporization and increasing pressure within the hydrogen storage tank 102. Conversely, when the pressure in the hydrogen storage tank 102 reaches an upper threshold of the desired pressure range, the controller 166 may position (e.g., close) the first valve 152 and the second valve 160 to block flow to the in-tank heat exchanger 150, directing both of the first portion and the second portion of the heated hydrogen fuel 108 to the hydrogen consumer 110 via the fuel delivery conduit 156.

By utilizing the catalyst heat exchanger 118 to cool the hydrogen fuel 108 through its endothermic para/ortho conversion, and then using the cooled hydrogen fuel 108 to absorb heat from the coolant 134, the first example hydrogen fuel system 100 increases the overall cooling capacity of the cooling system 136. This arrangement allows for efficient heat management and enables increased power output from the hydrogen consumer 110. Additionally or alternatively, incorporating the catalyst heat exchanger 118 enables reduced cooling system size, cost, and/or complexity. By way of example, there may be an approximately 1 kilowatt (kW) of heat rejection provided by using the catalyst heat exchanger 118 to perform the para/ortho conversion per kilogram (kg) of hydrogen fuel 108 consumed. When the hydrogen consumer 110 is a fuel cell, there may be at least a 10% reduction in in the cooling system load of the cooling device 148.

It is to be appreciated that in at least one variation, multiple hydrogen storage tanks 102 are included. In such variations, each individual hydrogen storage tank 102 may include its own catalyst heat exchanger 118, with respective tank outlet conduits 122 flowing the hydrogen fuel 108 to the same coolant-fed heat exchanger 116. For example, flow paths for the hydrogen fuel 108 from each hydrogen storage tank 102 may converge at the coolant-fed heat exchanger 116 or upstream of the coolant-fed heat exchanger 116. The system may further include respective valves and conduits (e.g., the first valve 152, the conduit 154, the return conduit 158, and the second valve 160) to selectively flow a portion of the hydrogen fuel 108 to a respective in-tank heat exchanger 150 depending on a pressure condition of the corresponding hydrogen storage tank 102.

FIG. 2 schematically shows an implementation of a second example hydrogen fuel system 200 of a vehicle. The second example hydrogen fuel system 200 is similar to the first example hydrogen fuel system 100 of FIG. 1. For example, the second example hydrogen fuel system 200 is a variation of the first example hydrogen fuel system 100 of FIG. 1. As such, like components are numbered the same and function as previously described. Therefore, for brevity, the present discussion will highlight differences between the first example hydrogen fuel system 100 of FIG. 1 and the second example hydrogen fuel system 200 of FIG. 2.

The second example hydrogen fuel system 200 differs from the first example hydrogen fuel system 100 of FIG. 1 in the arrangement of the catalyst 120. In the second example hydrogen fuel system 200, the catalyst 120 is integrated into the coolant-fed heat exchanger 116, rather than being positioned inside the hydrogen storage tank 102 (see FIG. 1). This arrangement allows for the para-ortho conversion of the hydrogen fuel 108 to occur directly within the coolant-fed heat exchanger 116.

In this configuration, the hydrogen inlet 126 provides the hydrogen fuel 108 directly to the tank outlet conduit 122 and to the coolant-fed heat exchanger 116. As the hydrogen fuel 108 passes through the coolant-fed heat exchanger 116, it interacts with the catalyst 120, facilitating the endothermic para-ortho conversion. This conversion process absorbs heat from the coolant 134, providing a cooling effect directly within the coolant-fed heat exchanger 116. However, because the catalyst heat exchanger 118 is absent from the second example hydrogen fuel system 200, no cooling effect is provided to the hydrogen storage tank 102. The integration of the catalyst 120 into the coolant-fed heat exchanger 116 may offer advantages in terms of system simplification and improved serviceability of the catalyst 120.

As in FIG. 1, the control system 164 manages the operation of the second example hydrogen fuel system 200, including the flow of hydrogen fuel 108 and coolant 134 to the hydrogen consumer 110. The controller 166 receives input from one or more of the plurality of sensors 168 and adjusts one or more of the plurality of actuators 170 accordingly based on current operating conditions.

In this way, the first example hydrogen fuel system 100 and the second example hydrogen fuel system 200 each provide systems wherein energy, in the form of heat, is absorbed from the hydrogen fuel 108 during the para/ortho conversion of the hydrogen fuel 108 by the catalyst 120. Although the first example hydrogen fuel system 100 of FIG. 1 includes the catalyst 120 inside of the hydrogen storage tank 102 (e.g., within the catalyst heat exchanger 118) while the second example hydrogen fuel system 200 includes the catalyst 120 outside of the hydrogen storage tank 102, in each example, the catalyst 120 is positioned in a flow path that couples the hydrogen storage tank 102 and the hydrogen consumer 110, e.g., between the hydrogen inlet 126 of the tank outlet conduit 122 and the hydrogen outlet 132 of the coolant-fed heat exchanger 116. By way of example, the catalyst 120 is positioned downstream of the hydrogen inlet 126 of the tank outlet conduit 122 and upstream of the hydrogen outlet 132 of the coolant-fed heat exchanger 116. As used herein, a first component is considered to be "downstream" of a second component when the first component is arranged to receive flow (e.g., of the hydrogen fuel 108) from the second component. In contrast, the first component is considered to be "upstream" of the second component when the first component is positioned to output flow to the second component.

It is to be appreciated that in at least one variation, the first example hydrogen fuel system 100 of FIG. 1 and/or the second example hydrogen fuel system 200 of FIG. 2 is adapted for use with cryocompressed hydrogen rather than cryogenic liquid hydrogen. In such adaptations, the hydrogen storage tank 102 may be configured to store hydrogen fuel 108 in a cryocompressed state, which is a high-pressure gaseous state at cryogenic temperatures.

For cryocompressed hydrogen storage, the hydrogen storage tank 102 may be designed to withstand higher pressures compared to the liquid hydrogen storage configuration. The hydrogen fuel 108 may exist within the hydrogen storage tank 102 primarily as a high-density gas, rather than as separate liquid and gaseous phases. The temperature of the cryocompressed hydrogen may be higher than that of liquid hydrogen (e.g., above -253 °C) but still within the cryogenic range.

In the cryocompressed adaptation, the catalyst heat exchanger 118 (FIG. 1) or the catalyst 120 integrated into the coolant-fed heat exchanger 116 (FIG. 2) may continue to facilitate the para/ortho conversion of the hydrogen fuel 108. However, the conversion process may occur at a different rate or efficiency due to the altered thermodynamic properties of the cryocompressed hydrogen compared to cryogenic liquid hydrogen. By way of example, the cryocompressed hydrogen may include a larger proportion of hydrogen molecules in the ortho state compared to the liquid hydrogen.

Moreover, in at least one implementation, the in-tank heat exchanger 150 may be modified or eliminated in the cryocompressed adaptation, as heating liquid hydrogen to generate more gaseous fuel is no longer utilized. Instead, the system may maintain the temperature and pressure of the cryocompressed hydrogen to in order to prepare the fuel for use in the hydrogen consumer 110.

By adapting the first example hydrogen fuel system 100 of FIG. 1 and/or the second example hydrogen fuel system 200 of FIG. 2 for cryocompressed hydrogen, the benefit of the higher energy density of cryocompressed storage (e.g., compared to cryogenic liquid hydrogen storage) may be achieved while leveraging the cooling effects of the para/ortho conversion process.

### Example Procedures

This section describes example procedures for a hydrogen catalyst for vehicle cooling. Aspects of the procedures may be implemented in hardware, firmware, software, or a combination thereof. The procedures are shown as a set of blocks that specify operations performed by one or more devices and are not necessarily limited to the orders shown for performing the operations by the respective blocks.

FIG. 3 is a flow diagram depicting an algorithm as a step-by-step procedure 300 in an example of implementing a hydrogen catalyst for vehicle cooling. In at least one implementation, at least a portion of the procedure 300 is performable by the controller 166 of the control system 164 introduced with respect to FIG. 1. For example, the procedure 300 may be executed by the controller 166 based on instructions stored on one or more memories of the control system 164 and in conjunction with signals received from one or more of the plurality of sensors 168. The controller 166 may employ one or more of the plurality of actuators 170 to adjust operation of the vehicle system according to the methods described below.

Operating conditions are estimated and/or measured (block 302). By way of example, the operating conditions may include temperatures, pressures, flow rates, and other parameters related to the hydrogen fuel system components and/or other vehicle components, such as a coolant temperature. As a non-limiting example, estimating and/or measuring the operating conditions may include measuring, by at least one of the plurality of sensors 168, a pressure in the hydrogen storage tank 102.

Hydrogen fuel is drawn through a catalyst positioned in a flow path coupling the hydrogen storage tank and a hydrogen consumer (block 304). By way of example, the hydrogen fuel comprises gaseous hydrogen, liquid hydrogen, or a mixture thereof, while the catalyst comprises a catalytic material that catalyzes a para to ortho conversion of the hydrogen fuel. In at least one implementation, such as illustrated with respect to the first example hydrogen fuel system 100 of FIG. 1, the catalyst 120 is positioned within the hydrogen storage tank 102, e.g., in the catalyst heat exchanger 118. In at least one variation, such as illustrated with respect to the second example hydrogen fuel system 200 of FIG. 2, the catalyst 120 is positioned external to the hydrogen storage tank 102, such as integrated with the coolant-fed heat exchanger 116. As such, in general, the catalyst 120 may be positioned in the flow path of the hydrogen fuel 108 from the hydrogen inlet 126, where the hydrogen fuel 108 is drawn from the hydrogen storage tank 102 into the tank outlet conduit 122, and the hydrogen outlet 132 of the coolant-fed heat exchanger 116.

The hydrogen fuel is converted to an ortho state via a para/ortho conversion of the hydrogen fuel at the catalyst (block 306). By way of example, the para/ortho conversion is an endothermic reaction that absorbs heat. As the hydrogen fuel flows through the catalyst, molecules of the hydrogen fuel (e.g., in the para state) interact with the catalyst, which facilitates a spin-flip of one of the hydrogen nuclei to convert the molecules to the ortho, higher energy level state. For example, the catalyst may absorb heat energy (e.g., from its surrounding environment, which may have a higher temperature potential) and transfer that heat energy to a given hydrogen molecule, which causes the spin configuration to change from the lower energy antiparallel configuration to the higher energy parallel configuration. In at least one implementation where the catalyst is positioned within the hydrogen storage tank, such as in the first example hydrogen fuel system 100 of FIG. 1, the para/ortho conversion may also provide direct cooling to the interior of the hydrogen storage tank. By way of example, the para/ortho conversion may absorb heat from molecules of hydrogen that are in contact with an exterior of the catalyst heat exchanger 118. Hydrogen gas, for example, has high thermal conductivity and can efficiently transfer heat through conduction. By providing a cooling effect to the contents of the hydrogen storage tank, a cooling capacity of the hydrogen fuel system (e.g., for providing cooling to the hydrogen consumer) may be increased.

The ortho-converted hydrogen fuel is flowed through a coolant-fed heat exchanger that thermally couples the ortho-converted hydrogen fuel to a coolant circuit (block 308). By way of example, the coolant-fed heat exchanger is arranged upstream of the hydrogen consumer in the flow path. As the ortho-converted hydrogen fuel flows through the coolant-fed heat exchanger, it absorbs heat from coolant circulating in the coolant circuit, which has been heated by the hydrogen consumer or other vehicle systems (e.g., a battery, an electric axle, or another coolant-cooled vehicle component). This increases the temperature of the hydrogen fuel while decreasing the temperature of the coolant.

It is to be appreciated that the coolant may also flow through other cooling system components, such as the cooling device 148 of FIGS. 1 and 2. The cooling device may be a radiator, for example, that rejects additional heat from the coolant to the surrounding environment (e.g., ambient air) before the cooled coolant returns to the hydrogen consumer.

It is determined if a hydrogen storage tank pressure is less than a first threshold (block 310). The first threshold may be a lower threshold pressure of a desired pressure range of the hydrogen storage tank. By way of example, at pressures less than the lower threshold pressure, it may be desired to increase the hydrogen storage tank pressure by facilitating boil-off of the liquid hydrogen to generate more gaseous hydrogen in the hydrogen storage tank. The hydrogen storage tank pressure may decrease, for example, due to consumption of the hydrogen fuel from the hydrogen storage tank (e.g., by the hydrogen consumer), cooling of the hydrogen fuel in the hydrogen storage tank, and/or tank slosh.

If the hydrogen storage tank pressure is less than the first threshold, at least one valve is positioned to enable flow of the hydrogen fuel from the coolant-fed heat exchanger to an in-tank heat exchanger (block 312). By way of example, the at least one valve may be the first valve 152 and the second valve 160 shown in FIGS. 1 and 2. The at least one valve may be adjusted to or maintained in the open position to enable a portion (e.g., a first portion) of the heated hydrogen fuel to be directed to the in-tank heat exchanger to increase the hydrogen storage tank pressure through vaporization of the liquid hydrogen, as further described below.

Heat is transferred from the heated hydrogen fuel to liquid hydrogen in the hydrogen storage tank via the in-tank heat exchanger (block 314). By way of example, the in-tank heat exchanger (e.g., the in-tank heat exchanger 150 shown in FIGS. 1 and 2) may thermally couple the heated hydrogen fuel to liquid hydrogen in the hydrogen storage tank. By transferring heat from the portion of the heated hydrogen fuel to the liquid hydrogen in the hydrogen storage tank, the hydrogen storage tank pressure may be increased.

The at least one valve is positioned to block flow of the hydrogen fuel from the coolant-fed heat exchanger to the in-tank heat exchanger in response to the hydrogen storage tank pressure reaching a second threshold (block 316). By way of example, the at least one valve may be adjusted from the open position to a closed (e.g., fully closed) position in response to the hydrogen storage tank pressure reaching the second pressure. Closing the at least one valve may prevent the heated hydrogen fuel from flowing to the in-tank heat exchanger while leaving open the flow path from the coolant-fed heat exchanger 116 to the hydrogen consumer 110. The second pressure may be an upper threshold pressure of the desired pressure range. This enables the hydrogen storage tank pressure to be increased to the upper threshold pressure after dropping below the lower threshold pressure in order to facilitate efficient operation of the hydrogen storage tank within the desired pressure range.

On the other hand, if the hydrogen storage tank pressure is not less than the first threshold (e.g., the hydrogen storage tank pressure is greater than or equal to the first threshold), the at least one valve is positioned to block flow of the hydrogen fuel from the coolant-fed heat exchanger to the in-tank heat exchanger (block 318). By way of example, the at least one valve may be maintained in the closed position so that none of the heated hydrogen fuel is directed to the in-tank heat exchanger.

In at least one variation, however, rather than using the first threshold and the second threshold, a single threshold (e.g., the first threshold) is used control the flow of the hydrogen fuel to the in-tank heat exchanger. By way of example, the at least one valve may be opened (e.g., at least partially opened) to enable the flow of the hydrogen fuel to the in-tank heat exchanger in response to the hydrogen storage tank pressure decreasing below the first threshold and then closed (e.g., fully closed) in response to the hydrogen storage tank pressure reaching the first threshold. It is to be understood that in no situation does a closed or partially closed valve block flow to the hydrogen consumer.

Thus, in one example, the procedure 300 may include determining a first pressure condition of the hydrogen storage tank, and in response thereto, enabling flow of the hydrogen fuel from the coolant-fed heat exchanger to the in-tank heat exchanger; and determining a second pressure condition (which occurs when the first pressure condition is not present), and in response thereto, blocking flow of the hydrogen fuel from the coolant-fed heat exchanger to the in-tank heat exchanger. In some examples, enabling flow of the hydrogen fuel from the coolant-fed heat exchanger to the in-tank heat exchanger occurs while or during the first pressure condition, and blocking flow of the hydrogen fuel from the coolant-fed heat exchanger to the in-tank heat exchanger occurs while the first pressure condition is not present and/or while or during the second pressure condition. Further, the first pressure condition may include a pressure of the hydrogen storage tank (e.g., the hydrogen storage tank pressure) being less than a lower threshold pressure, and the second pressure condition may include the pressure of the hydrogen storage tank remaining at or above the lower threshold pressure. By way of example, the hydrogen storage tank may transition from the second pressure condition to the first pressure condition in response to the pressure of the hydrogen storage tank decreasing below the lower threshold pressure. Then, once in the first pressure condition, the hydrogen storage tank may transition back to the second pressure condition in response to the pressure of the hydrogen storage tank increasing above an upper threshold pressure. The lower threshold pressure and the upper threshold pressure may define a desired pressure range for operating the hydrogen storage tank, for instance.

Further, instructions stored in memory may include instructions for determining the first pressure condition from a signal received from a pressure sensor, and in response, positioning the at least one valve to enable the flow of the hydrogen fuel from the coolant-fed heat exchanger to the in-tank heat exchanger by instructions for sending an actuation signal to the at least one valve. Instructions stored in memory may further include instructions for determining the second pressure condition from the signal received from the pressure sensor, and in response, positioning the at least one valve to block the flow of the hydrogen fuel from the coolant-fed heat exchanger to the in-tank heat exchanger by instructions for sending a different actuation signal to the at least one valve. As a further example, instructions stored in memory may include instructions for differentiating between the first pressure condition and the second pressure condition based on the signal received from the pressure sensor and determining whether to operate with the at least one valve positioned to block or enable flow to the in-tank heat exchanger based on a determination of whether the first pressure condition is present and a determination of whether the second pressure condition is present.

The heated hydrogen fuel is provided to the hydrogen consumer (block 320). The hydrogen consumer may be, for example, a fuel cell or a hydrogen combustion engine configured to utilize the hydrogen fuel to generate power (or energy) for vehicle propulsion and/or to power other vehicle systems. The heated hydrogen fuel, now at an appropriate temperature and for consumption, may be delivered via a fuel delivery conduit (e.g., the fuel delivery conduit 156 of FIGS. 1 and 2) that fluidically couples the coolant-fed heat exchanger to the hydrogen consumer.

In this way, the procedure 300 implements a hydrogen catalyst for vehicle cooling that utilizes the endothermic para-ortho conversion to increase cooling capacity and efficiency of a cooling system.

### Example Vehicle System

FIG. 4 is a top view schematically illustrating an example configuration of a vehicle 400 in which the techniques described herein may be implemented. In the example illustrated in FIG. 4, the vehicle 400 is an electric truck including a ladder frame 402 (e.g., a vehicle chassis), a cab 404, a packing box 406, a wheel mechanism 408, and an electric propulsion system 410. The vehicle 400 further includes, from FIGS. 1 and 2, the hydrogen storage tank 102, the hydrogen consumer 110, the cooling system 136, and the control system 164 including the controller 166, the plurality of sensors 168, and the plurality of actuators 170. FIG. 4 is illustrated as a top view where the cab 404 and the packing box 406 are transparent, as indicated by dashed boundaries.

In the example shown in FIG. 4, the electric propulsion system 410 includes an inverter 412, a battery 414, an electric motor 416, a speed reduction mechanism 418, and a differential 420. The electric motor 416 generates a driving force for propelling the vehicle 400 from AC power supplied by the inverter 412, as will be elaborated below. Moreover, rather than an electric truck, the vehicle 400 may be another type of electric commercial vehicle, such as a cargo van.

The inverter 412 converts DC power supplied from the battery 414 and/or directly from the hydrogen consumer 110 to AC power and supplies it to the electric motor 416. The inverter 412 further controls the rotational speed of the electric motor 416 in accordance with an accelerator operation to the vehicle 400. The battery 414 and/or the hydrogen consumer 110 supply power to the electric motor 416 as an energy source for producing torque to propel the vehicle 400. By way of example, energy produced via the hydrogen consumer 110 may be stored in the battery 414 and/or provided directly to the electric propulsion system 410.

The battery 414 may include a plurality of battery modules, also termed battery packs, which may be relatively large-sized and have a large energy storage capacity in order to store enough power for propelling the vehicle 400. Furthermore, a DC-DC converter 422 is included as a power converting device for supplying power to low-voltage devices mounted on the vehicle 400 by lowering a voltage of the relatively high-voltage power output from the battery 414.

The ladder frame 402 includes side rails 424 and a plurality of cross members 426, only one of which is labeled for illustrative clarity. Moreover, the side rails 424 extend in a vehicle longitudinal direction X of the vehicle 400, from the front to the rear of the vehicle 400. For example, the side rails 424 include a left side rail and a right side rail disposed in parallel to each other in a vehicle width direction Y. The plurality of cross members 426 connect the left side rail and the right side rail and stabilize the side rails 424 with respect to each other. The ladder frame 402 supports the cab 404, the packing box 406, the hydrogen consumer 110, the inverter 412, the battery 414, and other heavy articles mounted on the vehicle 400.

The cab 404 is a structural body including a driver's seat (not shown) and is provided on an upper front part of the ladder frame 402. The cab 404 may further include a sleeper cab. The packing box 406 is a structural body on which cargo carried by the vehicle 400 is mounted and is provided on an upper rear part of the ladder frame 402.

The wheel mechanism 408 comprises left and right front wheels 428 located on the front of the vehicle, a front axle 430 as an axle of the front wheels 428, rear wheels 432 located on the rear of the vehicle and disposed two each on the left and right, and a rear axle 434 as an axle of the rear wheels 432. In the example depicted in FIG. 4, the vehicle 400 is a rear drive vehicle, with the driving force transmitted to the rear wheels 432 via the rear axle 434. By way of example, the rear axle 434 may be an electric axle. It is to be appreciated that the wheel mechanism 408 may be suspended by the ladder frame 402 through a suspension mechanism (not shown) and supports the weight of the vehicle 400.

The speed reduction mechanism 418 reduces a rotary torque input from the electric motor 416 and outputs it to the differential 420. For example, the speed reduction mechanism 418 includes one or more gears for reducing the torque produced by the electric motor 416 for input to the differential 420. The differential 420 distributes the power input from the speed reduction mechanism 418 to the rear wheels 432. For example, the electric propulsion system 410 reduces the torque of the electric motor 416 to a rotational speed suitable for a desired speed of vehicle travel through the speed reduction mechanism 418 and the differential 420 and transmits the driving force to the rear axle 434. As a result, the electric propulsion system 410 may rotate the rear wheels 432 through the rear axle 434 and cause the vehicle 400 to travel.

The battery 414 may be charged with power generated by the hydrogen consumer 110 operating as a fuel cell, such as described above with respect to FIG. 1. In at least one implementation, the battery 414 may also be charged with power generated via regenerative braking, where kinetic energy of the vehicle is transformed into electric energy by the electric motor 416. That is, in at least one implementation, the electric motor 416 is a motor/generator that is capable of both transforming electrical energy generated by the hydrogen consumer 110 into kinetic energy used to propel the vehicle and transforming kinetic energy of the vehicle into electrical energy for storage at the battery 414. For example, the rotation of the rear wheels 432 turns the electric motor 416, which generates electricity during a speed reduction event. As such, regenerative braking allows the electric propulsion system 410 to recover some of the energy that would otherwise be lost during braking, which increases an efficiency of the vehicle 400.

In at least one implementation, the cooling system 136 includes a drive component cooling system 436 and a cabin cooling system 438. For example, the drive component cooling system 436 includes components that are used to provide cooling to the hydrogen consumer 110, including, from FIGS. 1 and 2, the coolant 134, the coolant-fed heat exchanger 116, the catalyst heat exchanger 118, the catalyst 120, the coolant circuit 138 and associated coolant lines, and the cooling device 148 (e.g., a radiator). The cabin cooling system 438 includes components that are used to provide cooling to the cab 404, including, for example, refrigerant, a condenser, an evaporator, an electric refrigerant compressor, and associated conduits and valves. The cooling system 136 may further include a fan 440 that is operated to increase air flow across components of the drive component cooling system 436 and/or the cabin cooling system 438.

Although the vehicle 400 is described as an electric vehicle where the hydrogen consumer 110 is a fuel cell, in at least one variation, the hydrogen consumer 110 is a combustion engine. As such, it is to be appreciated that the vehicle 400 is one example of a vehicle that may utilize the first example hydrogen fuel system 100 of FIG. 1 or the second example hydrogen fuel system 200 of FIG. 2 for more efficient heat management of the hydrogen consumer 110.

In any case, as described herein, the liquid-cooled condenser thermally couples the refrigerant in the refrigerant circuit to the coolant in the coolant circuit, thus increasing a cooling capacity and efficiency of the refrigerant circuit without increasing the size of the air condenser. As a result, challenges that come with increasing the size of the air condenser, such as packaging constraints and the effects of airflow and pressure across the larger air condenser, may be avoided. Moreover, an incidence of compressor overloading may be reduced by including the liquid-cooled condenser rather than a larger air condenser.

In one aspect, provided herein is a system, comprising: a catalyst positioned in a flow path coupling a hydrogen storage tank to a hydrogen consumer, the catalyst configured to convert hydrogen fuel from a para state to an ortho state via an endothermic reaction, a coolant circuit configured to circulate coolant through the hydrogen consumer, and a coolant-fed heat exchanger configured to thermally couple the coolant in the coolant circuit to the hydrogen fuel, the coolant-fed heat exchanger arranged upstream of the hydrogen consumer in the flow path. In a first example of the system, the catalyst is arranged within the hydrogen storage tank. In a second example of the system, optionally including the first example, the catalyst is further arranged within a heat exchanger coupled upstream of an outlet conduit that flows the hydrogen fuel from the hydrogen storage tank to the coolant-fed heat exchanger. In a third example of the system, optionally including one or both of the first and second examples, the catalyst is arranged within the coolant-fed heat exchanger in a separate flow path from the coolant. In a fourth example of the system, optionally including one or more or each of the first through third examples, the system further comprises: an in-tank heat exchanger positioned within the hydrogen storage tank, a first valve arranged at a hydrogen outlet of the coolant-fed heat exchanger and adjustable to block or enable flow from the coolant-fed heat exchanger to the in-tank heat exchanger, and a return conduit coupling the in-tank heat exchanger to the flow path, upstream of the coolant-fed heat exchanger. In a fifth example of the system, optionally including one or more or each of the first through fourth examples, the in-tank heat exchanger is positioned to transfer heat from the hydrogen fuel to cryogenic liquid hydrogen fuel within the hydrogen storage tank. In a sixth example of the system, optionally including one or more or each of the first through fifth examples, the system further comprises: a controller including executable instructions stored in non-transitory memory that, when executed, cause the system to perform operations comprising: positioning the first valve in a first position to enable a first portion of the hydrogen fuel to flow from the hydrogen outlet of the coolant-fed heat exchanger to the in-tank heat exchanger and a second, remaining portion of the hydrogen fuel to flow to the hydrogen consumer in response to a first pressure condition of the hydrogen storage tank, and positioning the first valve in a second position to block the flow of the first portion of the hydrogen fuel to the in-tank heat exchanger and enable both of the first portion and the second, remaining portion of the hydrogen fuel to flow from the coolant-fed heat exchanger to the hydrogen consumer in response to a second pressure condition of the hydrogen storage tank. In a seventh example of the system, optionally including one or more or each of the first through sixth examples, the first pressure condition of the hydrogen storage tank comprises a pressure of the hydrogen storage tank being less than a desired pressure range, and the second pressure condition of the hydrogen storage tank comprises the pressure of the hydrogen storage tank being within the desired pressure range. In an eighth example of the system, optionally including one or more or each of the first through seventh examples, the system further comprises: a second valve arranged in a conduit coupling an outlet of the in-tank heat exchanger to the flow path coupling the hydrogen storage tank to the hydrogen consumer at a position upstream of the coolant-fed heat exchanger, the second valve adjustable to block or enable flow from the in-tank heat exchanger to the flow path. In a ninth example of the system, optionally including one or more or each of the first through eighth examples, the hydrogen consumer is configured to utilize the hydrogen fuel to generate power for propelling a vehicle.

In another aspect, provided herein is a method, comprising: drawing hydrogen fuel through a catalyst positioned in a flow path coupling a hydrogen storage tank storing the hydrogen fuel and a hydrogen consumer, converting the hydrogen fuel to an ortho state at the catalyst, and flowing the ortho-converted hydrogen fuel through a coolant-fed heat exchanger that thermally couples the ortho-converted hydrogen fuel to a coolant circuit, the coolant-fed heat exchanger positioned upstream of the hydrogen consumer. In a first example of the method, the coolant circuit flows coolant through the hydrogen consumer, and wherein the coolant absorbs heat from the hydrogen consumer before flowing to the coolant-fed heat exchanger. In a second example of the method, optionally including the first example, the method further comprises: operating a valve positioned at an outlet of the coolant-fed heat exchanger, upstream of the hydrogen consumer, to block or enable flow to an in-tank heat exchanger positioned within the hydrogen storage tank. In a third example of the method, optionally including one or both of the first and second examples, operating the valve positioned at the outlet of the coolant-fed heat exchanger, upstream of the hydrogen consumer, to block or enable flow to the in-tank heat exchanger positioned within the hydrogen storage tank is based on a pressure of the hydrogen storage tank relative to a desired pressure range. In a fourth example of the method, optionally including one or more or each of the first through third examples, operating the valve positioned at the outlet of the coolant-fed heat exchanger, upstream of the hydrogen consumer, to block or enable flow to the in-tank heat exchanger positioned within the hydrogen storage tank comprises: positioning the valve to enable flow to the in-tank heat exchanger in response to a pressure of the hydrogen storage tank relative decreasing below a lower threshold of a desired pressure range, and positioning the valve to block flow to the in-tank heat exchanger in response to the pressure of the hydrogen storage tank increasing above an upper threshold pressure of the desired pressure range. In a fifth example of the method, optionally including one or more or each of the first through fourth examples, flowing the ortho-converted hydrogen fuel through the coolant-fed heat exchanger that thermally couples the ortho-converted hydrogen fuel to the coolant circuit heats the ortho-converted hydrogen fuel to an operating temperature, and wherein the method further comprises: providing the hydrogen fuel that is heated to the operating temperature to the hydrogen consumer, and generating energy by consuming the hydrogen fuel that is heated to the operating temperature at the hydrogen consumer.

In another aspect, provided herein is a system for a vehicle, comprising: a hydrogen storage tank storing hydrogen fuel, a hydrogen consumer configured to utilize the hydrogen fuel to generate power for the vehicle, a catalyst positioned in a flow path coupling the hydrogen storage tank to the hydrogen consumer, a coolant circuit configured to circulate coolant through the hydrogen consumer, and a coolant-fed heat exchanger configured to thermally couple the coolant in the coolant circuit to the hydrogen fuel, the coolant-fed heat exchanger arranged downstream of the catalyst and upstream of the hydrogen consumer in the flow path. In a first example of the system, the system further comprises: an in-tank heat exchanger positioned within the hydrogen storage tank, a valve arranged at a hydrogen outlet of the coolant-fed heat exchanger and adjustable between a first position that blocks flow from the coolant-fed heat exchanger to the in-tank heat exchanger and a second position that enables flow from the coolant-fed heat exchanger to the in-tank heat exchanger, a return conduit coupling the in-tank heat exchanger to the flow path, upstream of the coolant-fed heat exchanger, and a controller including executable instructions stored in non-transitory memory that, when executed, cause the controller to: operate the valve in the first position in response to a pressure of the hydrogen storage tank being within a desired pressure range, and operate the valve in the second position in response to the pressure of the hydrogen storage tank decreasing below the desired pressure range. In a second example of the system, optionally including the first example, the catalyst is configured to convert the hydrogen fuel from a para state to an ortho state via an endothermic reaction, and wherein the catalyst is positioned within the hydrogen storage tank in a catalyst heat exchanger. In a third example of the system, optionally including one or both of the first and second examples, the catalyst is configured to convert the hydrogen fuel from a para state to an ortho state via an endothermic reaction, and wherein the catalyst is integrated with the coolant-fed heat exchanger.

Although the systems and techniques have been described in language specific to structural features and/or methodological acts, it is to be understood that the systems and techniques defined in the appended claims are not necessarily limited to the specific features or acts described. Rather, the specific features and acts are disclosed as example forms of implementing the claimed subject matter.

For instance, in one or more alternative or additional aspects, each of the components and operational steps outlined above may be embodied in a variety of interchangeable forms so as to achieve one or more of the features of the present disclosure. For example, although the catalyst 120 has been described as a support material or bed of ferric oxide, platinum, and/or another material that facilitates the spin-flip process of the para to ortho conversion of the hydrogen fuel 108, the same functional objective-namely, promoting the endothermic para-to-ortho conversion of hydrogen-may be accomplished with any catalytically active structure configured to effect a nuclear-spin isomerization reaction. Suitable alternatives therefore include, without limitation, particulate beds, wash-coated foams, micro-channel inserts, catalytic fins, and layered or laminated stacks fabricated from or coated with one or more of iron, chromium, nickel, platinum group metals, or combinations, alloys, and composites thereof. The catalyst may further be supported on, embedded within, bonded to, or otherwise mechanically or chemically affixed to metallic, ceramic, polymeric, or composite substrates. In some variations, the catalytic function may be distributed among a plurality of discrete catalyst modules arranged in series, in parallel, or in a hybrid series-parallel network, any or all of which may be disposed at one or more positions along the flow path between the hydrogen storage tank 102 and the hydrogen consumer 110.

Likewise, while the Figures depict a single coolant-fed heat exchanger 116, in alternative configurations multiple heat exchangers may be fluidly coupled in cascade, counter-flow, cross-flow, or co-flow arrangements, each optionally sized or tuned for a targeted operating regime. A first heat exchanger may provide gross temperature elevation of cryogenic fuel, while a downstream unit, which may or may not contain a catalyst, may accomplish a fine-tuning or trimming function immediately upstream of the hydrogen consumer 110. Any reference herein to "the" coolant-fed heat exchanger should therefore be construed to embrace one, two, or more heat exchange devices operating collectively or independently to achieve the stated thermal-management functions described herein. Each such exchanger may employ plate-and-frame, fin- and-tube, micro-channel, spiral-wound, brazed-aluminum, or additive-manufactured geometries, or any combination thereof, and may utilize enhanced-surface features (e.g., offset strip fins, louvered fins, dimpled plates) to optimize heat-transfer coefficients.

The coolant 134 circulating in coolant circuit 138 is described illustratively as water, glycol-based antifreeze, or a mixture thereof, however, any refrigerant, dielectric fluid, alcohol-water blend, ionic liquid, brine, phase-change material slurry, or other heat-transfer medium having temperature- and pressure-handling characteristics compatible with the desired duty cycle may be substituted. Similarly, references to "liquid" coolant encompass single-phase, two-phase, and sub-cooled or super-heated fluid conditions. The coolant circuit itself may be single-loop, dual-loop, or multi-loop, with dedicated or shared pumps, valves, reservoirs, and sensors, all of which may be mechanically, electrically, pneumatically, hydraulically, magnetically, or piezoelectrically actuated. Any pump described herein may be a centrifugal, positivedisplacement, jet-ejector, electro-hydrodynamic, or magneto-hydrodynamic device, including combinations thereof.

The first valve 152 and second valve 160 described herein may be implemented as on/off, proportional, modulating, throttling, or variable-geometry devices having rotary, linear, diaphragm, pinch, needle, spool, poppet, or MEMS-based valving elements. Flow-control functionality may alternatively be achieved or supplemented by bypass orifices, variable-speed pumps, pulse-width-modulated solenoids, or smart materials (e.g., shape-memory alloys or electro-active polymers) that react to electrical, thermal, or magnetic stimuli. The first valve, second valve, and any additional valving elements may be co-located, dispersed, or integrated within heat-exchanger headers, manifolds, or other fluid-handling structures along the flow path. Accordingly, any description herein relating to a valve that "blocks" or "enables" flow is intended to read on any structure or combination of structures that directly, indirectly, partially, or fully regulate the flow.

Note that the example control and estimation routines included herein can be used with various engine and/or vehicle system configurations. The control methods and routines disclosed herein may be stored as executable instructions in non-transitory memory and may be carried out by the control system including the controller in combination with the various sensors, actuators, and other engine hardware. The specific routines described herein may represent one or more of any number of processing strategies such as event-driven, interrupt-driven, multi-tasking, multithreading, and the like. As such, various actions, operations, and/or functions illustrated may be performed in the sequence illustrated, in parallel, or in some cases omitted. Likewise, the order of processing is not necessarily required to achieve the features and advantages of the example implementations described herein but is provided for ease of illustration and description. One or more of the illustrated actions, operations and/or functions may be repeatedly performed depending on the particular strategy being used. Further, the described actions, operations and/or functions may graphically represent code to be programmed into non-transitory memory of the computer readable storage medium in the engine control system, where the described actions are carried out by executing the instructions in a system including the various engine hardware components in combination with the electronic controller.

Moreover, in some case, the functionality of the logic executed by controller 166 is not limited to threshold-based pressure comparisons but may instead or additionally employ open-loop schedules, closed-loop feedback control, modelpredictive algorithms, fuzzy logic, or machine-learning techniques that reference any combination of vehicle speed, accelerator position, ambient temperature, coolant temperature, hydrogen quality, catalyst temperature, or any other sensed or inferred parameter. The controller 166 may be implemented as a single microprocessor or as a distributed computing architecture encompassing one or more electronic control units (ECUs), application-specific integrated circuits (ASICs), field-programmable gate arrays (FPGAs), system-on-chip (SoC) devices, or cloud-connected processors. Software and firmware may be updated over-the-air, via wired connections, or through removable media, and any control functionality described herein may be partitioned between on-board and remote resources.

In addition to the cryogenic liquid and cryocompressed hydrogen implementations already described, the same architecture may be applied, without limitation, to high-pressure ambient-temperature gaseous hydrogen, slush hydrogen, solid-state hydrogen carriers (e.g., metal hydrides, adsorbed hydrogen), or any hybrid state wherein hydrogen transitions between phases during storage, transport, or delivery. Correspondingly, the hydrogen storage tank 102 may be a single-wall, doublewall, vacuum-jacketed, foam-insulated, filament-wound composite, metallic, polymeric, or multi-material vessel, cylindrical, spherical, conformable, or otherwise shaped, and may include phase-change-material jackets, active cryo-coolers, or integrated structural support members. Multiple storage tanks of dissimilar construction or state may be plumbed in parallel, series, or a selectable network such that fuel draw may be optimized for efficiency, range, or performance.

The hydrogen consumer 110, while exemplified herein as a fuel cell stack or hydrogen combustion engine, also any type of hybrid power-generation units, or any apparatus that directly or indirectly converts the chemical energy of hydrogen into mechanical or electrical work, heat, or a combination thereof.

Any sensor 168 referred to herein may detect pressure, temperature, flow rate, density, level, vibration, acoustic emissions, hydrogen purity, leak rate, or other parameters using mechanical, electrical, optical, ultrasonic, microwave, infrared, capacitive, inductive, resonant, or quantum-based measurement principles. Sensor redundancy, fault tolerance, self-diagnostics, and fail-safe modes may be incorporated to increase reliability. References to a "pressure sensor," "temperature sensor," or the like therefore cover any sensing technology or combination of technologies capable of providing a directly measured or inferred signal corresponding to the referenced parameter.

Also, in the interests of definitional clarity and to secure the broadest enforceable scope, it is emphasized that recitation of "a," "an," or "the" component is intended to mean "at least one" unless the context unambiguously dictates otherwise. Functional language-such as "configured to," "adapted to," "arranged to," or "positioned to"-should be interpreted to encompass structures and methods that achieve the stated result, regardless of whether they employ the identical mechanisms illustrated herein. Where ranges are given, values just outside those ranges are also contemplated, recognizing that real-world tolerances and application-specific design considerations may necessitate slight deviations. Features described in connection with separate aspects may be combined, permuted, or interchanged unless expressly excluded or logically incompatible.

It will be appreciated that the configurations and routines disclosed herein are illustrative in nature, and that these specific implementations are not to be considered in a limiting sense because numerous variations are possible. The subject matter of the present disclosure includes all novel and non-obvious combinations and sub-combinations of the various systems and configurations, and other features, functions, and/or properties disclosed herein. It is to be understood that the features of the various exemplary embodiments, aspects, and examples described herein may be combined with each other, unless specifically noted otherwise or unless such a combination would be clearly illogical or technically unfeasible to one of ordinary skill in the art. Accordingly, the foregoing disclosure is not to be considered in a limiting sense, as numerous variations are possible, and the subject matter is not limited to the specific features or acts described, but rather includes all such combinations and permutations.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Moreover, the terms "first," "second," and "third," etc. are used merely as labels and are not intended to impose numerical requirements or a particular positional order on their objects. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A system, comprising:
a catalyst positioned in a flow path coupling a hydrogen storage tank to a hydrogen consumer, the catalyst configured to convert hydrogen fuel from a para state to an ortho state via an endothermic reaction;
a coolant circuit configured to circulate coolant through the hydrogen consumer; and
a coolant-fed heat exchanger configured to thermally couple the coolant in the coolant circuit to the hydrogen fuel, the coolant-fed heat exchanger arranged upstream of the hydrogen consumer in the flow path.

2. The system of claim 1, wherein the catalyst is arranged within the hydrogen storage tank,
and/or
wherein the catalyst is further arranged within a heat exchanger coupled upstream of an outlet conduit that flows the hydrogen fuel from the hydrogen storage tank to the coolant-fed heat exchanger,
or
wherein the catalyst is arranged within the coolant-fed heat exchanger in a separate flow path from the coolant.

3. The system of claim 1 or 2, further comprising:
an in-tank heat exchanger positioned within the hydrogen storage tank;
a first valve arranged at a hydrogen outlet of the coolant-fed heat exchanger and adjustable to block or enable flow from the coolant-fed heat exchanger to the in-tank heat exchanger; and
a return conduit coupling the in-tank heat exchanger to the flow path, upstream of the coolant-fed heat exchanger.

4. The system of claim 3, wherein the in-tank heat exchanger is positioned to transfer heat from the hydrogen fuel to cryogenic liquid hydrogen fuel within the hydrogen storage tank.

5. The system of claim 3 or 4, further comprising a controller including executable instructions stored in non-transitory memory that, when executed, cause the system to perform operations comprising:
positioning the first valve in a first position to enable a first portion of the hydrogen fuel to flow from the hydrogen outlet of the coolant-fed heat exchanger to the in-tank heat exchanger and a second, remaining portion of the hydrogen fuel to flow to the hydrogen consumer in response to a first pressure condition of the hydrogen storage tank; and
positioning the first valve in a second position to block the flow of the first portion of the hydrogen fuel to the in-tank heat exchanger and enable both of the first portion and the second, remaining portion of the hydrogen fuel to flow from the coolant-fed heat exchanger to the hydrogen consumer in response to a second pressure condition of the hydrogen storage tank.

6. The system of claim 5, wherein the first pressure condition of the hydrogen storage tank comprises a pressure of the hydrogen storage tank being less than a desired pressure range, and the second pressure condition of the hydrogen storage tank comprises the pressure of the hydrogen storage tank being within the desired pressure range.

7. The system of any one of claims 3 to 6, further comprising:
a second valve arranged in a conduit coupling an outlet of the in-tank heat exchanger to the flow path coupling the hydrogen storage tank to the hydrogen consumer at a position upstream of the coolant-fed heat exchanger, the second valve adjustable to block or enable flow from the in-tank heat exchanger to the flow path.

8. The system of any one of claims 1 to 7, wherein the hydrogen consumer is configured to utilize the hydrogen fuel to generate power for propelling a vehicle.

9. A method, comprising:
drawing hydrogen fuel through a catalyst positioned in a flow path coupling a hydrogen storage tank storing the hydrogen fuel and a hydrogen consumer;
converting the hydrogen fuel to an ortho state at the catalyst to generate orthconverted hydrogen fuel; and
flowing the ortho-converted hydrogen fuel through a coolant-fed heat exchanger that thermally couples the ortho-converted hydrogen fuel to a coolant circuit, the coolant-fed heat exchanger positioned upstream of the hydrogen consumer.

10. The method of claim 9, wherein the coolant circuit flows coolant through the hydrogen consumer, and wherein the coolant absorbs heat from the hydrogen consumer before flowing to the coolant-fed heat exchanger.

11. The method of claim 9 or 10, further comprising:
operating a valve positioned at an outlet of the coolant-fed heat exchanger, upstream of the hydrogen consumer, to block or enable flow to an in-tank heat exchanger positioned within the hydrogen storage tank,
and/or
wherein operating the valve positioned at the outlet of the coolant-fed heat exchanger, upstream of the hydrogen consumer, to block or enable flow to the in-tank heat exchanger positioned within the hydrogen storage tank is based on a pressure of the hydrogen storage tank relative to a desired pressure range,
and/or
wherein operating the valve positioned at the outlet of the coolant-fed heat exchanger, upstream of the hydrogen consumer, to block or enable flow to the in-tank heat exchanger positioned within the hydrogen storage tank comprises:
positioning the valve to enable flow to the in-tank heat exchanger in response to a pressure of the hydrogen storage tank relative decreasing below a lower threshold of a desired pressure range; and
positioning the valve to block flow to the in-tank heat exchanger in response to the pressure of the hydrogen storage tank increasing above an upper threshold pressure of the desired pressure range.

12. The method of any one of claims 9 to 11, wherein flowing the ortho-converted hydrogen fuel through the coolant-fed heat exchanger that thermally couples the ortho-converted hydrogen fuel to the coolant circuit heats the ortho-converted hydrogen fuel to an operating temperature, and wherein the method further comprises:
providing the hydrogen fuel that is heated to the operating temperature to the hydrogen consumer; and
generating energy by consuming the hydrogen fuel that is heated to the operating temperature at the hydrogen consumer.

13. A vehicle system for a vehicle, comprising the system of any one of claims 1 to 8,
wherein:
the hydrogen storage tank is configured to store the hydrogen fuel;
the hydrogen consumer is configured to utilize the hydrogen fuel to generate power for the vehicle; and
the coolant-fed heat exchanger is arranged downstream of the catalyst in the flow path.

14. The vehicle system of claim 13, further comprising:
an in-tank heat exchanger positioned within the hydrogen storage tank;
a valve arranged at a hydrogen outlet of the coolant-fed heat exchanger and adjustable between a first position that blocks flow from the coolant-fed heat exchanger to the in-tank heat exchanger and a second position that enables flow from the coolant-fed heat exchanger to the in-tank heat exchanger;
a return conduit coupling the in-tank heat exchanger to the flow path, upstream of the coolant-fed heat exchanger; and
a controller including executable instructions stored in non-transitory memory that, when executed, cause the controller to:
operate the valve in the first position in response to a pressure of the hydrogen storage tank being within a desired pressure range; and
operate the valve in the second position in response to the pressure of the hydrogen storage tank decreasing below the desired pressure range.

15. The vehicle system of claim 13 or 14, wherein the catalyst is configured to convert the hydrogen fuel from a para state to an ortho state via an endothermic reaction, and wherein the catalyst is positioned within the hydrogen storage tank in a catalyst heat exchanger,
and/or
wherein the catalyst is configured to convert the hydrogen fuel from a para state to an ortho state via an endothermic reaction, and wherein the catalyst is integrated with the coolant-fed heat exchanger.
